# EUROPÄISCHE PATENTSCHRIFT

(11) **EP 3 019 763 B1**
(45) Veröffentlichungstag und Bekanntmachung des Hinweises auf die Patenterteilung: **14.06.2017**
(21) Anmeldenummer: 14700680.3
(22) Anmeldetag: 16.01.2014
(51) Int. Cl.: F16D 33/18

(54) **HYDRODYNAMISCHE MASCHINE, INSBESONDERE HYDRODYNAMISCHE KUPPLUNG**
HYDRODYNAMIC MACHINE, IN PARTICULAR HYDRODYNAMIC COUPLING
MACHINE HYDRODYNAMIQUE, EN PARTICULIER ACCOUPLEMENT HYDRODYNAMIQUE

(30) Priorität: 03.05.2013 DE 102013007544
(43) Veröffentlichungstag der Anmeldung: 18.05.2016
(73) Patentinhaber: Voith Patent GmbH, 89522 Heidenheim (DE)
(72) Erfinder: BREGLER, Haymo, 74579 Fichtenau (DE)
(86) Internationale Anmeldenummer: PCT/EP2014/050776
(87) Internationale Veröffentlichungsnummer: WO 2014/177287

(56) Entgegenhaltungen:
- EP-A1- 1 229 269
- EP-A1- 1 633 991
- DE-A1- 10 327 133

## Beschreibung

Die vorliegende Erfindung betrifft eine hydrodynamische Maschine, insbesondere eine hydrodynamische Kupplung, im Einzelnen gemäß dem Oberbegriff von Anspruch 1.

Hydrodynamische Maschinen, die ein umlaufendes, beschaufeltes Primärrad und ein stationär oder ebenfalls umlaufendes, beschaufeltes Sekundärrad aufweisen, bei einer hydrodynamischen Kupplung Pumpenrad und Turbinenrad genannt und bei einem hydrodynamischen Retarder Rotor und Stator oder Rotor und Gegenlaufrotor genannt, weisen herkömmlich Wälzlager zur Lagerung der umlaufenden Bauteile auf. Es sind jedoch auch bereits hydrodynamische Kupplungen vorgeschlagen worden, die mit dem Arbeitsmedium geschmierte Gleitlager aufweisen, siehe beispielsweise DE 101 20 477 B4 und EP 1 633 991 B1.

Aus der EP 1 229 269 A1 ist ein Getriebe bekannt, bei dem Wasser als Arbeitmittel und Schmiermittel für die Lager eingesetzt wird.

Aus der DE 103 27 133 A1 ist eine hydrodynamische Kupplung - mit einem Pumpen- und einem Turbinenrad bekannt. Durch das Pumpen- und Turbinenrad wird ein mit Betriebsmittel füllbarer Arbeitsraum gebilden. Die hydrodynamische Kupplung weist ein Betriebsmittel-Versorgungs- und/oder Fuehrungssystem auf, wobei das Betriebsmittel-Versorgungs- und/oder Fuehrungssystem einen geschlossenen Kreislauf umfasst. Der Kreislauf wiederum umfasst eine Bypass-Schaltung und in der Bypass-Schaltung ist ein Betriebsmitteltank oberhalb der Kupplungsunterkante angeordnet. Die Bypass-Schaltung ist an das Gehäuse der Kupplung angeschlossen und bildet eine direkte Verbindung zwischen Tank und Gehäuse und die Bypass-Schaltung mündet im Gehäuse in einen drucklosen oder einen unter einem geringeren Druck als der durch die Schwerkraft des Betriebsmittels bei Führung zwischen Tank und Gehäuse stehenden Raum.

Ferner schlägt die DE 101 20 477 B4 vor, bei einer hydrodynamischen Kupplung die kombinierten Axial- und Radiallager als Gleitlager mit Flüssigkeitsreibung auszuführen, wobei das Arbeitsmedium als Schmiermittel verwendet wird und die Versorgung der Lager aus der Betriebsmittelversorgung der Kupplung erfolgt.

Bei den bekannten hydrodynamischen Kupplungen mit mit Arbeitsmedium geschmierten Gleitlagern kann nicht sicher ausgeschlossen werden, dass die Schmiermittelzufuhr zu den Lagern in bestimmten Betriebszuständen unterbrochen oder erheblich reduziert ist. So lehrt die europäische Patentschrift EP 1 633 991 B1 ausdrücklich, dass eine Lagerversorgung erst bei Erreichen eines bestimmten Druckes im System erfolgt, um eine schnellere Befüllung des Arbeitsraumes der hydrodynamischen Kupplung mit Arbeitsmedium zu erreichen. Ferner ist es bei den bekannten Kupplungen möglich, dass beispielsweise die Abtriebswelle im Schleppbetrieb gedreht wird, bevor die Schmiermittelversorgung der Lager in Betrieb genommen wird, sodass bereits eine Schädigung der Lager droht. Schließlich kann die Schmiermittelversorgung zeitweilig aufgrund äußerer Umstände ausfallen, was zu einem Trockenlaufen der Lager führen kann.

Der genannten Problematik konnte herkömmlich nur dadurch begegnet werden, dass verhältnismäßig teure Gleitlager zum Einsatz gelangten, die einen zeitweiligen Trockenlauf zuließen. Dies führt jedoch zu unerwünscht hohen Herstellungskosten der hydrodynamischen Kupplung.

Der vorliegenden Erfindung liegt daher die Aufgabe zugrunde, eine hydrodynamische Maschine, insbesondere eine hydrodynamische Kupplung anzugeben, welche ein Trockenlaufen beziehungsweise einen trockenen Betrieb der Gleitlager zuverlässig verhindert.

Die erfindungsgemäße Aufgabe wird durch eine hydrodynamische Maschine mit den Merkmalen von Anspruch 1 gelöst. In den abhängigen Ansprüchen sind vorteilhafte und besonders zweckmäßige Ausgestaltungen der Erfindung angegeben.

Eine erfindungsgemäße hydrodynamische Maschine, insbesondere hydrodynamische Kupplung, weist ein über einer Drehachse der hydrodynamischen Maschine umlaufendes beschaufeltes Primärrad und ein stationäres oder ebenfalls über der Drehachse umlaufendes beschaufeltes Sekundärrad auf. Primärrad und Sekundärrad bilden miteinander einen torusförmigen mit einem Arbeitsmedium befüllten oder befüllbaren Arbeitsraum aus, um Drehmoment hydrodynamisch mittels eines Arbeitsmediumkreislaufes im Arbeitsraum vom Primärrad auf das Sekundärrad zu übertragen, um dadurch entweder das Sekundärrad bei angetriebenem Primärrad hydrodynamisch anzutreiben (bei einer hydrodynamischen Kupplung) oder bei einem hydrodynamischen Retarder, um das angetriebene Primärrad abzubremsen. Die vorliegende Erfindung ist jedoch nicht nur bei hydrodynamischen Kupplungen und hydrodynamischen Retardern, sondern auch bei hydrodynamischen Wandlern anwendbar, die neben dem Primärrad und dem Sekundärrad im Arbeitsraum wenigstens ein Leitrad aufweisen, um eine Drehmomentwandlung zu ermöglichen.

Das Primärrad und/oder das Sekundärrad sind erfindungsgemäß mittels wenigstens eines Gleitlagers drehbar gelagert. Beispielsweise ist das Sekundärrad mittels wenigstens eines Axiallagers, insbesondere mit einem sogenannten Anlaufring, und mittels eines oder mehrerer Radiallager gelagert, wobei die genannten Lager jeweils als Gleitlager ausgeführt sind. Eine entsprechende Lagerung kommt natürlich auch für das Primärrad in Betracht, jedoch kann dieses auch fremdgelagert sein, beispielsweise auf der Abtriebswelle einer Antriebsmaschine. Anstelle des Primärrades könnte auch das Sekundärrad fremdgelagert sein und die erfindungsgemäße Gleitlagerung nur beim Primärrad vorgesehen sein.

Zur Schmiermittelversorgung für das wenigstens eine Gleitlager der hydrodynamischen Maschine ist ein Schmiermittelversorgungssystem vorgesehen, umfassend eine Schmiermittelquelle, die über wenigstens eine Schmiermittelversorgungsleitung mit dem wenigstens einen Gleitlager verbunden ist, und mit einem Schmiermittelauslass, der über eine Schmiermittelabfuhrleitung mit dem wenigstens einen Gleitlager verbunden ist. Somit ist es möglich, dem wenigstens einen Gleitlager Schmiermittel aus der Schmiermittelquelle über die Schmiermittelversorgungsleitung zuzuführen und dieses Schmiermittel aus dem Gleitlager über die Schmiermittelabfuhrleitung wieder abzuführen, insbesondere um im Gleitlager aufgenommene Reibungswärme wieder aus dem Schmiermittel abzuführen. Die Abfuhr kann, insbesondere durch einen Wärmetauscher hindurch, wenigstens mittelbar zurück in die Schmiermittelquelle erfolgen, oder bei einem offenen Kreislauf auch zu einer anderen Stelle.

Erfindungsgemäß ist nun in der Schmiermittelversorgungsleitung und/oder in der Schmiermittelabfuhrleitung ein Schmiermittelreservebehälter vorgesehen, der zur Ausbildung eines Schmiermittelkreislaufes zwischen dem Schmiermittelreservebehälter und dem wenigstens einen Gleitlager bei einem Ausfall der Schmiermittelversorgung aus der Schmiermittelquelle über wenigstens einen Schmiermittelvorlauf und wenigstens einen Schmiermittelrücklauf mit dem wenigstens einen Gleitlager verbunden ist. Bei einem Ausfall der Schmiermittelversorgung aus der Schmiermittelquelle kann somit trotzdem eine Schmiermittelzufuhr aus dem Schmiermittelreservebehälter in das wenigstens eine Gleitlager und eine Schmiermittelabfuhr aus dem wenigstens einen Gleitlager zurück in den Schmiermittelreservebehälter erfolgen, wodurch ein Schmiermittelkreislauf zur Abfuhr der Wärme aus dem Gleitlager aufrechterhalten wird. Der Schmiermittelreservebehälter kann entsprechend dimensioniert, mit Kühlrippen versehen sein und/oder anderweitig gekühlt werden, sodass eine zumindest über einen bestimmten Zeitraum ausreichende Wärmeabfuhr aus dem Schmiermittel und damit eine Kühlung des Gleitlagers möglich ist.

Ferner ist es möglich, die hydrodynamische Maschine mit einem bereits mit Schmiermittel gefülltem Schmiermittelreservebehälter auszuliefern, sodass auch bei einem Drehen des Primärrades und/oder des Sekundärrades, bevor die hydrodynamische Maschine an die Schmiermittelquelle angeschlossen wird oder das Schmiermittelversorgungssystem in Betrieb genommen wird, über den genannten "kleinen" Schmiermittelkreislauf aus dem Schmiermittelreservebehälter über den Vorlauf in das Gleitlager und über den Rücklauf zurück in den Schmiermittelreservebehälter ein Trockenlaufen beziehungsweise ein trockener Betrieb des wenigstens einen Gleitlagers verhindert wird.

Beispielsweise kann der Schmiermittelreservebehälter im Auslieferungszustand der hydrodynamischen Maschine zu 50 Prozent bis 90 Prozent, insbesondere zu 75 bis 85 Prozent oder besonders vorteilhaft zu 80 Prozent mit Schmiermittel gefüllt sein. Als Schmiermittel kommt vorteilhaft Wasser oder ein Wassergemisch in Betracht. Jedoch sind auch andere Schmiermittel möglich, beispielsweise Öl, wie Mineralöl oder Silikonöl oder anderes.

Eine günstige erfindungsgemäße Ausführungsform sieht vor, dass der Schmiermittelreservebehälter wenigstens vier Schmiermittelanschlüsse aufweist, nämlich einen ersten Schmiermittelanschluss, der mit der Schmiermittelquelle verbunden ist und über welchen somit Schmiermittel aus der Schmiermittelquelle in den Schmiermittelreservebehälter eingeleitet werden kann, einen zweiten Schmiermittelanschluss, der mit dem Schmiermittelauslass verbunden ist, sodass Schmiermittel aus dem Schmiermittelreservebehälter beispielsweise in den Arbeitsraum der hydrodynamischen Maschine, für eine andere Verwendung oder zur Entsorgung ausgeleitet werden kann, einen dritten Schmiermittelanschluss, der mit dem Schmiermittelvorlauf verbunden ist, sodass Schmiermittel aus dem Schmiermittelreservebehälter dem wenigstens einen Gleitlager zugeführt werden kann, und einen vierten Schmiermittelanschluss, der mit dem Schmiermittelrücklauf verbunden ist, sodass Schmiermittel aus dem wenigstens einen Gleitlager zurück in den Schmiermittelreservebehälter eingeleitet werden kann, um den zuvor beschriebenen gewünschten "kleinen" Schmiermittelkreislauf auszubilden.

Gemäß einer vorteilhaften Ausführungsform ist in der Schmiermittelversorgungsleitung ein Absperrventil und/oder ein Umschaltventil vorgesehen, wobei ein solches Umschaltventil wenigstens drei Anschlüsse aufweisen kann. Über den ersten Anschluss ist es mit der Schmiermittelquelle verbunden, über den zweiten Anschluss ist es mit dem Schmiermittelreservebehälter verbunden und über den dritten Anschluss ist es mit dem wenigstens einen Gleitlager verbunden. Das Umschaltventil weist wenigstens zwei Schaltstellungen auf, nämlich eine erste Schaltstellung, in welcher zumindest oder ausschließlich die Schmiermittelquelle mit dem wenigstens einen Gleitlager schmiermittelleitend verbunden ist, wobei der Schmiermittelreservebehälter insbesondere abgetrennt ist, und eine zweite Schaltstellung, in welcher der Schmiermittelreservebehälter schmiermittelleitend mit dem wenigstens einen Gleitlager verbunden ist und insbesondere die Schmiermittelquelle abgetrennt ist.

Das Umschaltventil kann als aktives Ventil ausgeführt sein, mit einem Aktuator, um die Schaltstellungen in Abhängigkeit eines zugeführten Steuersignals aktiv zu schalten. Der Aktuator kann beispielsweise einen elektrischen, elektromagnetischen, hydraulischen oder pneumatischen Antrieb aufweisen. Alternativ ist es auch möglich, das Umschaltventil als passives Ventil auszuführen, das in Abhängigkeit der an ihm anliegenden Schmiermitteldrücke in den Anschlüssen schaltet. Beispielsweise kann es automatisch den Anschluss der Schmiermittelquelle verschließen, wenn dort ein Druckabfall stattfindet beziehungsweise ein vergleichsweise niedriger Druck anliegt, und gleichzeitig den Anschluss des Schmiermittelreservebehälters öffnen oder geöffnet halten, und den Anschluss der Schmiermittelquelle öffnen, wenn dort ein vergleichsweise höherer Druck anliegt, und insbesondere gleichzeitig den Anschluss des Schmiermittelreservebehälters schließen.

Das Umschaltventil und/oder ein Absperrventil kann gemäß einer Ausführungsform kontinuierlich geöffnet bleiben, solange Schmiermittel aus der Schmiermittelquelle in der Schmiermittelversorgungsleitung ansteht. Eine alternative Ausführungsform sieht vor, dass das Ventil synchron zum Füllen oder Kühlen des Arbeitsraumes der hydrodynamischen Maschine geschaltet wird oder dass eine getaktete Schaltung vorgesehen ist. Diese Funktion kann auch allein durch ein Absperrventil in der Schmiermittelversorgungsleitung erfüllt werden.

Im Schmiermittelvorlauf und/oder im Schmiermittelrücklauf kann/können eine oder mehrere Drosselblenden vorgesehen sein, um einen vorgegebenen Staudruck in dem Gleitlager zu erreichen.
Eine besonders vorteilhafte Ausführungsform, die besonders mit dem im Auslieferungszustand bereits gefüllten Schmiermittelreservebehälter vorgesehen werden kann, sieht im ersten Schmiermittelanschluss eine Berstscheibe, insbesondere eine erste Berstscheibe, vor, die durch Beaufschlagung des ersten Schmiermittelanschlusses mit Schmiermittel aus der Schmiermittelversorgungsleitung zerstörbar ist. Dies bedeutet, dass, sobald die Schmiermittelquelle an die Schmiermittelversorgungsleitung angeschlossen wird und somit Schmiermittel aus der Schmiermittelquelle mit einem vorgegebenen Druck in die Schmiermittelversorgungsleitung strömt, die Berstscheibe automatisch zerstört wird und damit der Zufluss von Schmiermittel in den Schmiermittelreservebehälter erreicht wird.

Im zweiten Schmiermittelanschluss kann eine Berstscheibe, insbesondere eine zweite Berstscheibe, vorgesehen sein, die durch Einströmen von Schmiermittel über den ersten Schmiermittelanschluss in den Schmiermittelreservebehälter zerstörbar ist. Das bedeutet, dass, sobald ein ausreichender Schmiermitteldruck durch weiteres Befüllen des Schmiermittelreservebehälters aus der Schmiermittelquelle erreicht wird, eine automatische Zerstörung der Berstscheibe im zweiten Schmiermittelanschluss erfolgt und hierdurch die Strömungsverbindung zur Schmiermittelabfuhrleitung hergestellt wird.

Eine konstruktiv günstige Ausführungsform sieht vor, dass der Schmiermittelreservebehälter eine Zylinderform oder Hohlzylinderform aufweist und die Schmiermittelanschlüsse über dem Umfang dieses Zylinders beziehungsweise Hohlzylinders verteilt angeordnet sind. Günstig ist es, wenn die Zylinderachse beziehungsweise Hohlzylinderachse mit der Drehachse der hydrodynamischen Maschine zusammenfällt. So kann beispielsweise der Schmiermittelreservebehälter stirnseitig an der hydrodynamischen Maschine angeschlossen werden, insbesondere lösbar oder unlösbar, beispielsweise geschweißt.
Selbstverständlich ist es auch möglich, dass die Zylinderachse oder Hohlzylinderachse exzentrisch zu der Drehachse der hydrodynamischen Maschine positioniert ist oder winklig zu dieser verläuft. Auch ist es möglich, eine andere sich über den Umfang der Drehachse (zentrisch oder exzentrisch) erstreckende Form des Schmiermittelreservebehälters vorzusehen, beispielsweise eine rechteckige Form, die Form eines Polyeders, eine Konusform oder anderes.

Der erste Schmiermittelanschluss und der zweite Schmiermittelanschluss können in Umfangsrichtung des Zylinders oder Hohlzylinders unmittelbar hintereinander vorgesehen sein, insbesondere mit einer zwischen ihnen angeordneten Trennwand, beispielsweise einem Trennblech. Hierdurch wird erreicht, dass stets eine nahezu 360 Grad-Durchströmung des Schmiermittelreservebehälters vom ersten Schmiermittelanschluss zum zweiten Schmiermittelanschluss erfolgt.

Wenn das Arbeitsmedium der hydrodynamischen Maschine zugleich das Schmiermittel für das wenigstens eine Gleitlager ist, so sieht eine erste Ausführungsform vor, dass die gesamte dem Arbeitsraum der hydrodynamischen Maschine zugeführte Arbeitsmediummenge durch den Schmiermittelreservebehälter strömt, bevor sie in den Arbeitsraum eintritt. Eine zweite Ausführungsform sieht vor, dass nur ein Teil des Arbeitsmediumstromes in den Arbeitsraum durch den Schmiermittelreservebehälter strömt. In jedem Fall ist es günstig, wenn die durch den Schmiermittelreservebehälter vom ersten Schmiermittelanschluss zum zweiten Schmiermittelanschluss strömende Arbeitsmedium-/Schmiermittelmenge derart bemessen ist, dass Schmutzablagerungen verhindert werden und eine ausreichende Kühlung des Schmiermittelreservebehälters erfolgt.

Günstig ist es, wenn der erste Schmiermittelanschluss und der zweite Schmiermittelanschluss oberhalb des dritten Schmiermittelanschlusses und des vierten Schmiermittelanschlusses im Schmiermittelreservebehälter positioniert sind. Vorteilhaft ist der vierte Schmiermittelanschluss oberhalb des dritten Schmiermittelanschlusses im Schmiermittelreservebehälter vorgesehen. Natürlich ist auch eine andere Positionierung möglich, wobei jedoch vorteilhaft sichergestellt wird, dass der gesamte Schmiermittelreservebehälter durchspült wird. Auch ist es möglich, dass mehrere Arbeitsmediumzufuhren, erste Schmiermittelanschlüsse und/oder zweite Schmiermittelanschlüsse vorgesehen sind.

Eine erfindungsgemäße Ausführungsform sieht vor, dass eine Vielzahl von dritten Schmiermittelanschlüssen und/oder vierten Schmiermittelanschlüssen im Schmiermittelreservebehälter vorgesehen sind. So können mehrere hinsichtlich der Schmiermittelströmung zueinander parallele Vorläufe und/oder Rückläufe am Schmiermittelreservebehälter angeschlossen werden.

Gemäß einem Ausführungsbeispiel ist eine Vielzahl von Gleitlagern vorgesehen, wobei verschiedene Gleitlager oder alle Gleitlager seriell vom Schmiermittel durchströmt werden können. Auch eine parallele Durchströmung einer oder mehrerer einzelner Gruppen von Gleitlagern oder aller Gleitlager ist möglich.

Vorteilhaft ist wenigstens ein Gleitlager als Axialgleitlager und wenigstens ein Gleitlager als Radialgleitlager ausgeführt und das Schmiermittel wird aus der Schmiermittelquelle und/oder dem Schmiermittelreservebehälter insbesondere zunächst zu dem wenigstens einen Radialgleitlager und anschließend zu dem Axialgleitlager geführt oder umgekehrt.

Insbesondere wenn mehrere Axialgleitlager und/oder mehrere Radialgleitlager vorgesehen sind, können vorteilhaft jeweils die Axialgleitlager und jeweils die Radialgleitlager parallel zueinander vom Schmiermittel durchströmt sein, wobei die Radialgleitlager hinsichtlich der Schmiermitteldurchströmung seriell zu den Axialgleitlagern geschaltet sind.

Vorteilhaft ist der Schmiermittelreservebehälter druckdicht gegenüber der Umgebung abgedichtet, insbesondere ebenso wie alle mittels Schmiermittel aus dem Schmiermittelversorgungssystem geschmierten Gleitlager. Die Gleitlager können beispielweise über Wellendichtungen, insbesondere Doppeldichtungen, beispielsweise PTEE-Doppeldichtungen, gegenüber der Umgebung abgedichtet sein.

Gemäß einer Ausführungsform der Erfindung wird der "kleine" Schmiermittelkreislauf zwischen dem Schmiermittelreservebehälter und dem wenigstens einen Gleitlager allein durch eine Pumpwirkung des wenigstens einen Gleitlagers aufrechterhalten beziehungsweise hergestellt. Beispielsweise kann der Anlaufring des Axialgleitlagers einen Differenzdruck erzeugen, sodass ein Sog an der des Anlaufrings zugewandten Seite des Radialgleitlagers, das neben dem Anlaufring positioniert ist und vor dem Axialgleitlager vom Schmiermittel durchströmt wird, entsteht. Aus dem Anlaufring wird dann, insbesondere durch Zentrifugalwirkung, das Schmiermittel zurück über den wenigstens einen Rücklauf in den Schmiermittelreservebehälter gefördert.

Das eine oder die mehreren Radialgleitlager können beispielsweise als Vielflächen-Radialgleitlager, insbesondere als Vierflächen-Radialgleitlager, ausgeführt sein. Das oder die Axialgleitlager können ebenfalls jeweils eine Vielzahl von Lagersegmenten aufweisen, die vorteilhaft kippbeweglich gelagert sind.

Eine vorteilhafte Ausführungsform sieht vor, dass parallel zum Rücklauf eine Entlüftungsleitung vorgesehen ist, die das wenigstens eine Gleitlager, insbesondere das Axialgleitlager, mit dem Inneren des

Schmiermittelreservebehälters verbindet.

Der wenigstens eine Vorlauf oder die Vielzahl von Vorläufen und/oder der wenigstens eine Rücklauf oder die Vielzahl von Rückläufen können schräg gegenüber einer Senkrechten und einer Waagerechten, insbesondere um 40 bis 50 Grad winklig versetzt hierzu verlaufen.

Die Erfindung soll nachfolgend anhand von Ausführungsbeispielen und den Figuren exemplarisch beschrieben werden.

Es zeigen:
- Figur 1: eine schematische Schnittdarstellung durch einen Axialschnitt einer erfindungsgemäß ausgeführten hydrodynamischen Kupplung;
- Figur 2: eine Ansicht in Axialrichtung durch die hydrodynamische Kupplung gemäß der Figur 1;
- Figur 3: die Ansicht aus der Figur 2 mit dem eingezeichneten Strömungsverlauf des Schmiermittels;
- Figur 4: eine Ansicht gemäß der Figur 1 mit eingezeichnetem Strömungsverlauf;
- Figur 5: ein alternatives Ausführungsbeispiel mit einem Umschaltventil in der Schmiermittelversorgungsleitung.

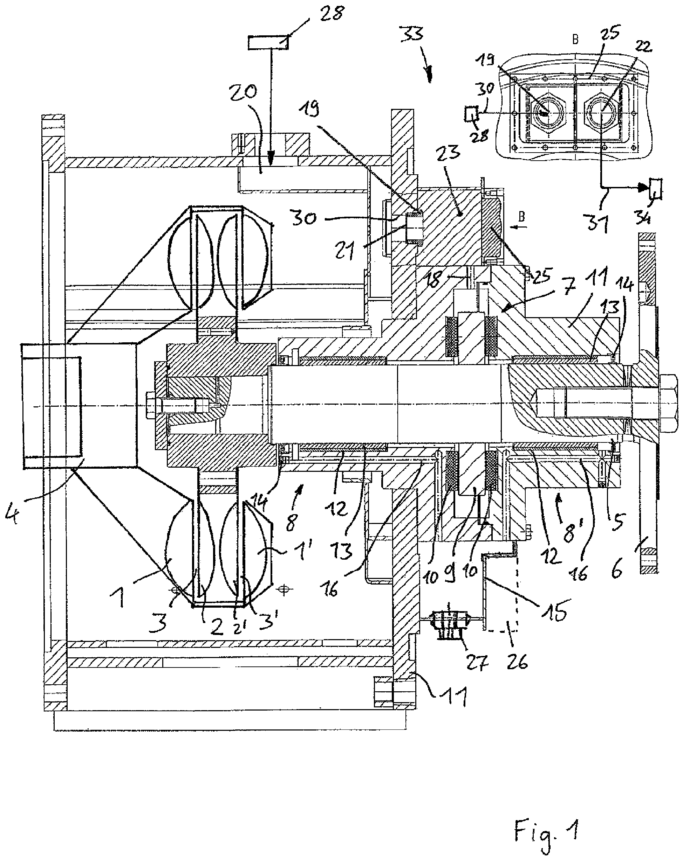

In der Figur 1 ist ein schematischer Axialschnitt durch eine hydrodynamische Maschine dargestellt, die vorliegend als hydrodynamische Kupplung ausgeführt ist. Demgemäß umfasst die hydrodynamische Maschine ein beschaufeltes umlaufendes Primärrad 1 und ein beschaufeltes umlaufendes Sekundärrad 2, die gemeinsam einen Arbeitsraum 3 ausbilden. Vorliegend ist noch die Besonderheit gezeigt, dass die hydrodynamische Maschine als doppelflutige Maschine ausgeführt ist, das heißt, dass diese zwei Arbeitsräume 3, 3' ausbildet, die zwischen zwei Primärrädern 1, 1' und zwei Sekundärrädern 2, 2' ausgebildet werden, wobei die Primärräder 1, 1' drehstarr aneinander angeschlossen sind und die Sekundärräder 2, 2' drehstarr aneinander angeschlossen sind, beispielsweise in der gezeigten Back-to-Back-Anordnung. Selbstverständlich könnte auch eine einflutige Maschine zur Anwendung kommen, oder, um einen hydrodynamischen Retarder darzustellen, könnte das Sekundärrad stationär gehalten sein oder gegenläufig zum Primärrad angetrieben werden.

Zum Antrieb des Primärrades 1 ist eine Antriebswelle 4 vorgesehen. Diese kann beispielsweise eine Antriebsöffnung aufweisen und zusammen mit dem oder den Primärrädern 1, 1' außerhalb der hydrodynamischen Maschine gelagert sein, beispielsweise auf der Abtriebswelle eines Antriebsmotors (nicht dargestellt).

Das beziehungsweise die Sekundärräder 2, 2' werden von einer Abtriebswelle 5 getragen, die ihrerseits einen Abtriebsflansch 6 aufweist.

Im gezeigten Ausführungsbeispiel ist nur die Abtriebswelle 4, welche das beziehungsweise die Sekundärräder 2, 2' trägt, mit einer erfindungsgemäßen Gleitlagerung versehen, umfassend ein Axialgleitlager 7 und zwei Radialgleitlager 8, 8'. Das Axialgleitlager 7 weist einen Anlaufring 9 auf, der mit auf beiden Seiten desselben positionierten, einander gegenüberstehenden Axiallagersegmenten 10 zusammenarbeitet. Die Axiallagersegmente 10 sind beispielsweise kippbeweglich durch einen Ansatz auf der Gehäuseseite gelagert, siehe die dem Gehäuse 11 der hydrodynamischen Maschine zugewandten axialen Vorsprünge.

Die Axiallagersegmente 10 können beispielsweise mit Spielpassung im Gehäuse 11 geführt sein und im Vergleich zu dem Anlaufring 9 aus einem vergleichsweise weicheren Werkstoff hergestellt sein. Der Anlaufring 9 ist beispielsweise mittels eines zylindrischen Pressverbands auf der Abtriebswelle 5 fixiert.

Das Gehäuse 11 nimmt auch die Radialgleitlager 8, 8' auf, die im gezeigten Ausführungsbeispiel eine mit leichter Pressung im Gehäuse 11 eingebrachte Buchse 12 aufweisen, in welche radial innen ein im Vergleich zum Werkstoff der Buchse 12 weicherer Lagerwerkstoff 13 eingebracht, insbesondere eingeklebt ist. Die Buchse 12 kann beispielsweise aus Stahl hergestellt sein oder aus einem anderen im Vergleich zum Lagerwerkstoff 13 härteren Werkstoff. Alternativ kann jedoch auch ein gleich harter oder weicherer Wirkstoff verwendet werden oder die gesamte Buchse 12 kann aus dem Lagerwerkstoff hergestellt sein.

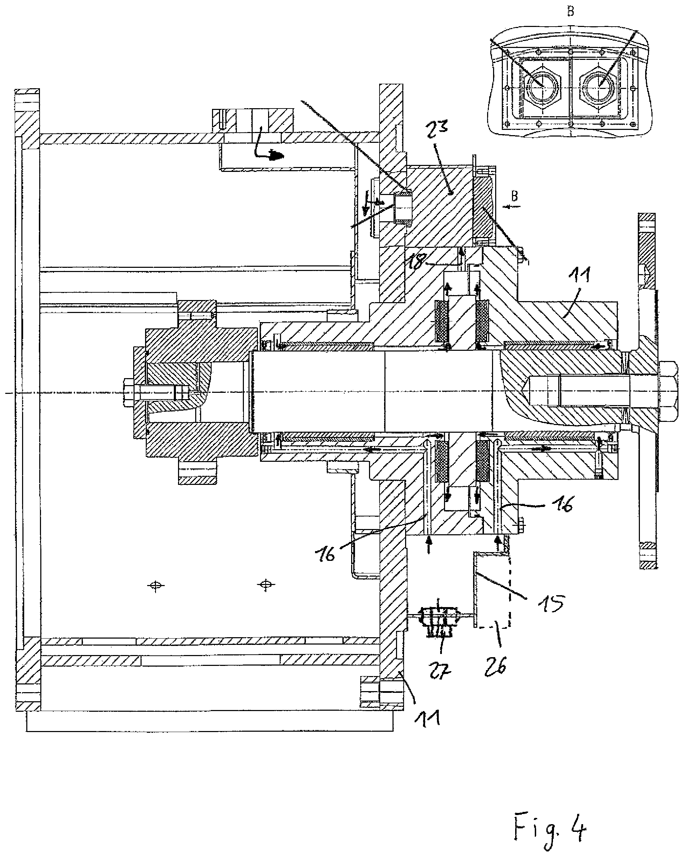

Die Radialgleitlager 8, 8' und das Axialgleitlager 7 sind schmiermittelleitend miteinander verbunden, wie in der Figur 4 durch den mit Pfeilen eingezeichneten Strömungsverlauf des Schmiermittels dargestellt ist und nachfolgend noch näher beschrieben wird.

Aufgrund dessen, dass die beiden Radialgleitlager 8, 8' das Axialgleitlager 7 in Axialrichtung zwischen sich einschließen, ist nur eine Abdichtung an den beiden einander abgewandten äußeren Enden der Radialgleitlager 8, 8' notwendig. Vorliegend wird diese Abdichtung durch Wellendichtungen 14 an den axialen Enden der Abtriebswelle 5 erreicht.

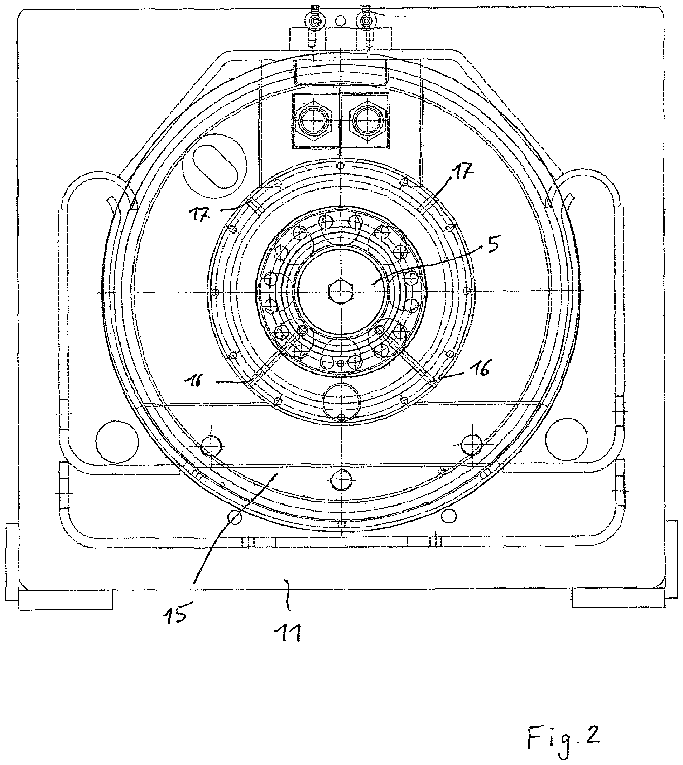

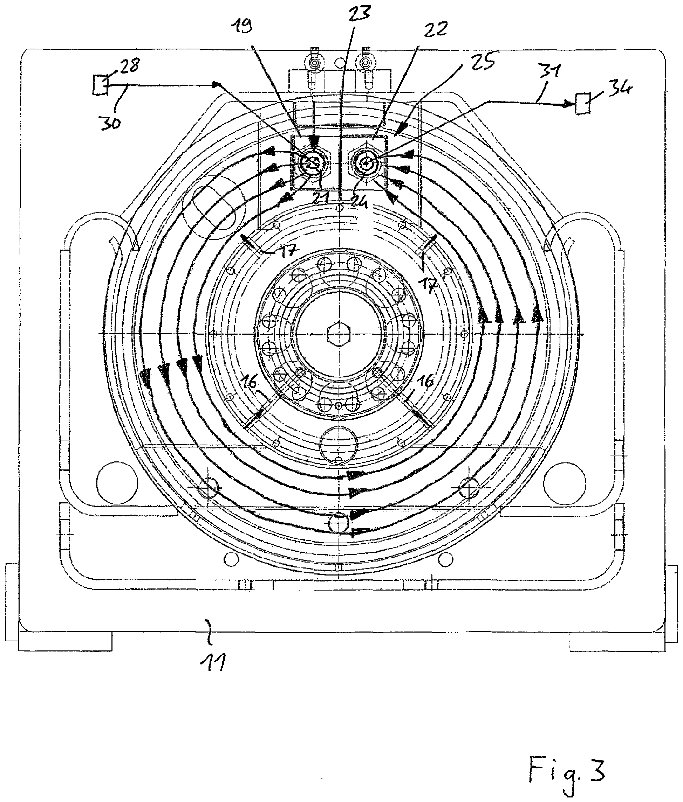

Zur Schmiermittelversorgung der Gleitlager ist ein Schmiermittelreservebehälter 15 vorgesehen, der über zwei hinsichtlich der Schmiermittelströmung parallele Schmiermittelvorläufe 16 und zwei parallele Schmiermittelrückläufe 17 mit den Gleitlagern verbunden ist, siehe hierzu auch die Figur 2. Die Schmiermittelvorläufe 16 führen Schmiermittel aus dem Schmiermittelreservebehälter 15 an die axial äußeren Enden der Radialgleitlager 8, 8', von wo das Schmiermittel in Axialrichtung nach innen durch die Radialgleitlager 8, 8' zum radial inneren Ende des Axialgleitlagers 7 strömt, anschließend radial nach außen durch das Axialgleitlager 7 hindurch und über den Schmiermittelrücklauf 17 zurück in den Schmiermittelreservebehälter 15. Dieser vorliegend auch als kleiner Schmiermittelkreislauf bezeichnete Strömungsvorgang ist in den Figuren 3 und 4 gezeigt.

In Strömungsrichtung parallel zu den Schmiermittelrückläufen 17 ist ferner eine Entlüftungsleitung 18 vorgesehen, die eine Entlüftung aus dem Axialgleitlager 7 in den Schmiermittelreservebehälter 15 ermöglicht, siehe hierzu die Figuren 1 und 4.

Eine Versorgung des im Auslieferungszustand der hydrodynamischen Maschine vorzugsweise bereits mit Schmiermittel teilgefüllten oder gefüllten Schmiermittelreservebehälters 15 erfolgt über den ersten Schmiermittelanschluss 19, der aus der Arbeitsmediumzufuhr 20 für den Arbeitsraum 3, 3' der hydrodynamischen Maschine abzweigt. Dieser erste Schmiermittelanschluss 19 ist im Auslieferungszustand der hydrodynamischen Maschine vorzugsweise durch eine erste Berstscheibe 21 verschlossen, die bei der ersten Druckbeaufschlagung der Arbeitsmediumzufuhr 20 mit Arbeitsmedium, das zugleich das Schmiermittel darstellt, zerstört wird.

Vom ersten Schmiermittelanschluss 19 strömt das Schmiermittel in Umfangsrichtung durch nahezu den gesamten Schmiermittelvorratsbehälter 15 zum zweiten Schmiermittelanschluss 22, der getrennt durch eine Trennwand oder ein Trennblech 23 in Umfangsrichtung in Strömungsrichtung des Schmiermittels betrachtet unmittelbar vor dem ersten Schmiermittelanschluss 19 positioniert ist, siehe die Figur 3. Der zweite Schmiermittelanschluss 22 kann ebenfalls im Auslieferungszustand der hydrodynamischen Maschine durch eine zweite Berstscheibe 24 verschlossen sein.

Um die Berstscheiben 21, 24, die beispielsweise in Klemmschrauben vorgesehen und in das Gehäuse 11 eingeschraubt sind, zugänglich zu halten, weist der Schmiermittelreservebehälter 15 einen abnehmbaren Deckel 25 auf, der dem ersten Schmiermittelanschluss 19 und dem zweiten Schmiermittelanschluss 22 in Axialrichtung gegenübersteht. Dieser Deckel 25 ist auch nochmals in der Einzelheit B in der Figur 1 dargestellt und man sieht, dass dieser am übrigen Gehäuse des Schmiermittelreservebehälters 15, das beispielsweise stirnseitig an dem Gehäuseteil, das die beschaufelten Räder der hydrodynamischen Maschine umschließt angeschlossen, insbesondere angeschweißt ist.

In dem gezeigten Ausführungsbeispiel kann somit ein Teil des über die Arbeitsmediumzufuhr 20 in den Arbeitsraum 3 strömenden Arbeitsmediums, beispielsweise Wasser, durch den ersten Schmiermittelanschluss 19 abgezweigt und durch den Schmiermittelreservebehälter 15 geleitet werden. Der aus dem zweiten Schmiermittelanschluss 22 ausströmende Schmiermittelstrom kann dann wieder zurück in die Arbeitsmediumzufuhr 20 geleitet werden und von dort in den Arbeitsraum 3. Alternativ wird der gesamte Arbeitsmediumstrom durch den Schmiermittelreservebehälter 15 geleitet und anschließend erst dem Arbeitsraum 3 zugeführt. Hierdurch kann eine vergleichsweise hohe Strömungsgeschwindigkeit des Schmiermittels im Schmiermittelreservebehälter 15 erreicht werden, die Schmutzablagerungen verhindert und eine gute Abkühlung des Schmiermittels im Schmiermittelreservebehälter 15 ermöglicht und zugleich eine eindeutige Fließrichtung des Schmiermittels/Arbeitsmediums festlegt.

Zur besseren Wärmeabfuhr von Wärme aus dem Schmiermittelreservebehälter 15 können beispielsweise auf dessen Außenseite Kühlrippen 26 vorgesehen sein, wie durch die gestrichelte Linie in den Figuren 1 und 4 angedeutet.

Eine mögliche Option ist ferner die Anordnung einer Ablassschraube 27 im unteren Bereich des Schmiermittelreservebehälters 15, um das Schmiermittel aus diesem ablassen zu können.

Wie dargestellt, führt der Staudruck in der Arbeitsmediumzufuhr 20 an der Abzweigung zum ersten Schmiermittelanschluss 19 beim erstmaligen Betrieb der hydrodynamischen Maschine dazu, dass die erste Berstscheibe 21 und im Anschluss daran auch die zweite Berstscheibe 24 bersten und der Schmiermittelreservebehälter 15 mit "frischem" Schmiermittel gespült wird, solange der Füllvolumenstrom von Arbeitsmedium für die hydrodynamischen Maschine in der Arbeitsmediumzufuhr 20 ansteht. Jedoch auch bei einer Unterbrechung dieses Füllvolumenstromes oder vor Inbetriebnahme der hydrodynamischen Maschine und einem gleichzeitigen Drehen der Abtriebswelle 5, beispielsweise im Schleppbetrieb, ist eine Schmiermittelversorgung der Gleitlager sichergestellt, da die Pumpwirkung der Gleitlager selbst, insbesondere des Axialgleitlagers 7, zu einer Förderung von Schmiermittel aus dem Schmiermittelreservebehälter 15 durch die Gleitlager hindurch zurück in den Schmiermittelreservebehälter 15 bewirkt. Beispielsweise ist das Axialgleitlager 7 derart gestaltet, dass aufgrund der Drehbewegung der Abtriebswelle 5 eine Fliehkraft auf das Schmiermittel im Axialgleitlager 7 wirkt und dieses radial von innen nach außen fördert. Hierdurch entsteht ein Unterdruck radial innen im Axialgleitlager 7, welcher wiederum Schmiermittel aus den beiden Radialgleitlagern 8, 8' ansaugt. Hierdurch wird zugleich Schmiermittel über die Schmiermittelvorläufe 16 angesaugt, wohingegen gleichzeitig der Überdruck im radial äußeren Bereich des Axialgleitlagers 7 das Schmiermittel über die Schmiermittelrückläufe 17 zurück in den Schmiermittelreservebehälter 15 fördert.

Die in den Figuren 2 und 4 dargestellte gegenüber einer Senkrechten und einer Waagerechten winklige Positionierung der Schmiermittelvorläufe 16 und der Schmiermittelrückläufe 17, beispielsweise um 45 Grad versetzt zu der Senkrechten und der Waagerechten durch den Schmiermittelreservebehälter 15, verhindert ein Ansaugen von Schmutz aus dem Schmiermittelreservebehälter 15 und erreicht, dass möglichst wenig Schmiermittel aus den Schmiermittelrückläufen 17 unmittelbar in den zweiten Schmiermittelanschluss 19 und damit aus dem Schmiermittelreservebehälter 15 herausströmt. Die im vorliegenden Ausführungsbeispiel im oberen Bereich senkrecht auf 12 Uhr positionierte Entlüftungsleitung 18 verhindert, dass sich im Bereich des Axialgleitlagers 7 Luft ansammelt.

Die Wellendichtungen 14 sind vorteilhaft weitgehend oder vollständig luftdicht ausgeführt, damit der Schmiermittelstrom nicht durch eindringende Luft abreißen kann.

Es wird somit ein Schmiermittelversorgungssystem 33 für die Gleitlager (hier das Axialgleitlager 7 und die Radialgleitlager 8, 8') geschaffen, das die Gleitlager aus einer Schmiermittelquelle, hier schematisch dargestellt und mit 28 bezeichnet, über eine Schmiermittelversorgungsleitung mit Schmiermittel versorgt und erwärmtes Schmiermittel aus dem Gleitlager über eine Schmiermittelabfuhrleitung zu einem Schmiermittelauslass, hier ebenfalls schematisch dargestellt und mit 34 bezeichnet, abführt.

Die Schmiermittelversorgungsleitung ist mit 30 bezeichnet und wird teilweise durch die Arbeitsmediumzufuhr 20 und im in den Figuren 1 bis 4 gezeigten Ausführungsbeispiel auch durch die Schmiermittelvorläufe 16 gebildet, da diese die Schmiermittelquelle 28 mit den Gleitlagern verbindet und jegliches Schmiermittel, das aus der Schmiermittelquelle 28 zu den Gleitlagern strömt, zunächst durch den Schmiermittelreservebehälter 15 strömen muss. Die Schmiermittelabfuhrleitung ist mit 31 bezeichnet und wird in diesem Ausführungsbeispiel teilweise durch die Schmiermittelrückläufe 17 gebildet, da diese zusammen mit dem Schmiermittelreservebehälter 15 die Gleitlager mit dem Schmiermittelauslass 34 verbinden. Somit ist der Schmiermittelreservebehälter 15 sowohl in der Schmiermittelversorgungsleitung 30 als auch in der Schmiermittelabfuhrleitung 31 positioniert, da sämtliches Schmiermittel aus der Schmiermittelquelle 28 beziehungsweise der Arbeitsmediumzufuhr 20 zunächst in den Schmiermittelreservebehälter 15 strömt, von dort in die Gleitlager und aus den Gleitlagern erneut in den Schmiermittelreservebehälter 15 strömt, bevor es zum Schmiermittelauslass 34 strömt.

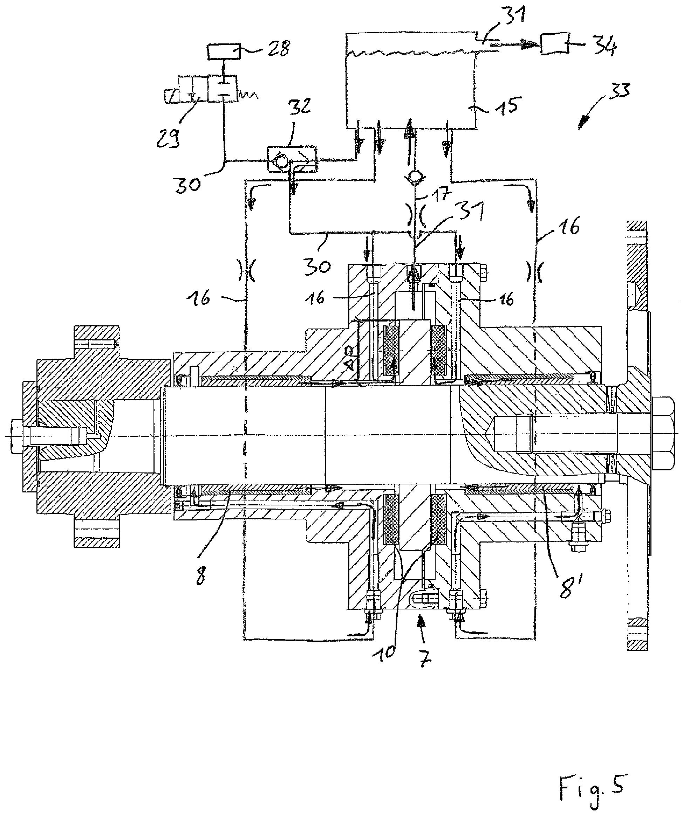

Bei dem in der Figur 5 dargestellten Ausführungsbeispiel hingegen kann Schmiermittel aus der Schmiermittelquelle 28 auch direkt durch die Schmiermittelversorgungsleitung 30 in die Gleitlager (Axialgleitlager 7 und Radialgleitlager 8, 8') strömen, ohne zuvor durch den Schmiermittelreservebehälter 15 zu strömen, da dieser nur in der Schmiermittelabfuhrleitung 31 positioniert ist, die teilweise durch den wenigstens einen Schmiermittelrücklauf 17 gebildet wird. Dies schließt nicht aus, dass die Gleitlager über eine weitere Schmiermittelleitung unter Umgehung des Schmiermittelreservebehälters 15 mit dem Schmiermittelauslass 34 verbunden ist. Der Schmiermittelreservebehälter 15 ist wiederum über parallele Schmiermittelvorläufe 16, wobei ein einziger Schmiermittelvorlauf ausreichen würde, und den wenigstens einen Schmiermittelrücklauf 17 (oder mehrere hiervon) mit den Gleitlagern verbunden. Somit kann Schmiermittel direkt aus der Schmiermittelquelle 28 unter Umgehung des Schmiermittelreservebehälters 15 zu den Gleitlagern strömen und gegebenenfalls zugleich über einen kleinen Kreislauf aus dem Schmiermittelreservebehälter 15. In diesem Sinne stellt sowohl die Verbindung des Schmiermittelreservebehälters 15 mit den Gleitlagern einen Schmiermittelvorlauf 16 dar als auch die direkte Verbindung der Schmiermittelversorgungsleitung 30 aus der Schmiermittelquelle 28 mit den Gleitlagern.

In dem gezeigten Ausführungsbeispiel ist in der Schmiermittelversorgungsleitung 33 ferner ein Umschaltventil 32 vorgesehen, das wahlweise einen Schmiermittelvorlauf 16 entweder mit der Schmiermittelquelle 28 oder mit dem Schmiermittelreservebehälter 15 verbindet, je nachdem, ob am ersten Anschluss des Umschaltventils 32, der mit der Schmiermittelquelle 28 verbunden ist, Schmiermitteldruck ansteht oder nicht. Wenn kein Druck ansteht, wird dieser erste Anschluss verschlossen. Wenn Druck ansteht, wird gemäß einer Ausführungsform der zweite Anschluss, an welchem der Schmiermittelreservebehälter 15 angeschlossen ist, verschlossen, wohingegen eine andere Ausführungsform vorsieht, dass dieser zweite Anschluss trotzdem geöffnet bleibt, sodass Schmiermittel aus der Schmiermittelquelle 28 durch das Umschaltventil 32 nicht nur zu den Gleitlagern, sondern auch in den Schmiermittelreservebehälter 15 strömen kann.

Im erstgenannten Fall kann das Umschaltventil 32 somit als doppelt wirkendes Rückschlagventil ausgeführt sein, wie dargestellt, im zweitgenannten Fall kann ein einfaches Rückschlagventil ausreichen.

Selbstverständlich könnte auch bei der Ausführungsform, die in der Figur 5 dargestellt ist, und die insbesondere einen außerhalb der hydrodynamischen Maschine beziehungsweise entfernt vom Gehäuse der hydrodynamischen Maschine positionierten Schmiermittelreservebehälter 15 aufweist, die Schmiermittelversorgungsleitung 30 stets über den Schmiermittelreservebehälter 15 geführt werden und somit das Verbindungsstück zwischen dem Umschaltventil 32 und den Gleitlagern eingespart werden. In diesem Fall könnte das Umschaltventil 32 nur zwei Anschlüsse aufweisen oder, wenn insbesondere das in Strömungsrichtung vor dem Umschaltventil 32 dargestellte Absperrventil 29 vorgesehen ist, gänzlich entfallen, wobei dann der Schmiermittelreservebehälter 15 wiederum entsprechend den Figuren 1 bis 4 ins Schmiermittelversorgungssystem 33 eingebunden wäre.

## Patentansprüche

1. Hydrodynamische Maschine, insbesondere hydrodynamische Kupplung, mit einem über einer Drehachse der hydrodynamischen Maschine umlaufenden beschaufelten Primärrad (1, 1') und einem stationären oder über der Drehachse umlaufenden beschaufelten Sekundärrad (2, 2'), die miteinander einen torusförmigen mit einem Arbeitsmedium befüllbaren oder befüllten Arbeitsraum (3, 3') ausbilden, um Drehmoment hydrodynamisch mittels eines Arbeitsmediumkreislaufes im Arbeitsraum (3, 3') vom Primärrad (1, 1') auf das Sekundärrad (2, 2') zu übertragen;
1.1 wobei das Primärrad (1, 1') und/oder das Sekundärrad (2, 2') mittels wenigstens eines Gleitlagers (7, 8, 8') drehbar gelagert ist;
1.2 mit einem Schmiermittelversorgungssystem (33) für das wenigstens eine Gleitlager (7, 8, 8'), umfassend eine Schmiermittelquelle (28), die über wenigstens eine Schmiermittelversorgungsleitung (30) mit dem Gleitlager (7, 8, 8') verbunden ist, und einem Schmiermittelauslass (34), der über eine Schmiermittelabfuhrleitung (31) mit dem wenigstens einen Gleitlager (7, 8, 8') verbunden ist;
**dadurch gekennzeichnet, dass**
1.3 in der Schmiermittelversorgungsleitung (30) und/oder der Schmiermittelabfuhrleitung (31) ein Schmiermittelreservebehälter (15) vorgesehen ist, der zur Ausbildung eines Schmiermittelkreislaufes zwischen dem Schmiermittelreservebehälter (15) und dem wenigstens einen Gleitlager (7, 8, 8') bei einem Ausfall der Schmiermittelversorgung aus der Schmiermittelquelle (28) über wenigstens einen Schmiermittelvorlauf (16) und wenigstens einen Schmiermittelrücklauf (17) mit dem wenigstens einen Gleitlager (7, 8, 8') verbunden ist.

2. Hydrodynamische Maschine gemäß Anspruch 1, **dadurch gekennzeichnet, dass** der Schmiermittelreservebehälter (15) wenigstens vier Schmiermittelanschlüsse aufweist, nämlich einen ersten Schmiermittelanschluss, der mit der Schmiermittelquelle (28) verbunden ist, einen zweiten Schmiermittelanschluss, der mit dem Schmiermittelauslass (34) verbunden ist, einen dritten Schmiermittelanschluss, der mit dem Schmiermittelvorlauf (16) verbunden ist, und einen vierten Schmiermittelanschluss, der mit dem Schmiermittelrücklauf (17) verbunden ist.

3. Hydrodynamische Maschine gemäß einem der Ansprüche 1 oder 2, **dadurch gekennzeichnet, dass** in der Schmiermittelversorgungsleitung (30) ein Absperrventil (29) und/oder ein Umschaltventil (32) vorgesehen ist, wobei das Umschaltventil (32) insbesondere über drei Anschlüsse mit der Schmiermittelquelle (28), dem Schmiermittelreservebehälter (15) und dem Gleitlager (7, 8, 8') verbunden ist, und in einer ersten Schaltstellung zumindest oder ausschließlich die Schmiermittelquelle (28) mit dem wenigstens einen Gleitlager (7, 8, 8') und in einer zweiten Schaltstellung nur den Schmiermittelreservebehälter (15) mit dem Gleitlager (7, 8, 8') verbindet.

4. Hydrodynamische Maschine gemäß einem der Ansprüche 1 bis 3, **dadurch gekennzeichnet, dass** das Schmiermittel ein Wasser oder ein Wassergemisch ist.

5. Hydrodynamische Maschine gemäß einem der Ansprüche 2 bis 4, **dadurch gekennzeichnet, dass** im ersten Schmiermittelanschluss und/oder im zweiten Schmiermittelanschluss eine Berstscheibe (24) vorgesehen ist.

6. Hydrodynamische Maschine gemäß einem der Ansprüche 2 bis 5, **dadurch gekennzeichnet, dass** der Schmiermittelreservebehälter (15) eine Zylinderform, Hohlzylinderform oder eine andere sich zentrisch oder exzentrisch über dem Umfang der Drehachse der hydrodynamischen Maschine erstreckende Form aufweist und die Schmiermittelanschlüsse über dem Umfang verteilt angeordnet sind.

7. Hydrodynamische Maschine gemäß einem der Ansprüche 6, **dadurch gekennzeichnet, dass** der erste Schmiermittelanschluss und der zweite Schmiermittelanschluss in Umfangsrichtung des Zylinders oder Hohlzylinders unmittelbar hintereinander, mit einer dazwischen angeordneten Trennwand, insbesondere in Form eines Trennblechs (23), vorgesehen sind.

8. Hydrodynamische Maschine gemäß einem der Ansprüche 6 und 7, **dadurch gekennzeichnet, dass** der vierte Schmiermittelanschluss oberhalb des dritten Schmiermittelanschlusses im Schmiermittelreservebehälter (15) positioniert ist.

9. Hydrodynamische Maschine gemäß einem der Ansprüche 1 bis 9, **dadurch gekennzeichnet, dass** eine Vielzahl von Gleitlagern (7, 8, 8') vorgesehen ist, wobei verschiedene Gleitlager (7, 8, 8') insbesondere seriell vom Schmiermittel durchströmt sind.

10. Hydrodynamische Maschine gemäß Anspruch 9, **dadurch gekennzeichnet, dass** wenigstens ein Gleitlager als Axialgleitlager (7) und wenigstens ein Gleitlager als Radialgleitlager (8, 8') ausgeführt ist und das Schmiermittel aus der Schmiermittelquelle (28) und/oder dem Schmiermittelreservebehälter (15) insbesondere zunächst zu dem wenigstens einen Radialgleitlager (8, 8') und anschließend zu dem Axialgleitlager (7) oder umgekehrt geführt ist.

11. Hydrodynamische Maschine gemäß Anspruch 10, **dadurch gekennzeichnet, dass** mehrere Axialgleitlager (7) und/oder Radialgleitlager (8, 8') vorgesehen sind, die jeweils parallel zueinander vom Schmiermittel durchströmt sind.

12. Hydrodynamische Maschine gemäß einem der Ansprüche 1 bis 11, **dadurch gekennzeichnet, dass** das Schmiermittel zugleich das Arbeitsmedium ist, wobei dieses insbesondere zunächst durch das oder die Gleitlager (7, 8, 8') und anschließend in den Arbeitsraum (3, 3') oder umgekehrt geleitet wird.

13. Hydrodynamische Maschine gemäß einem der Ansprüche 1 bis 12, **dadurch gekennzeichnet, dass** das Schmiermittel zugleich das Arbeitsmedium ist, wobei dieses parallel durch das oder die Gleitlager (7, 8, 8') und in den Arbeitsraum (3, 3') geleitet wird.

14. Hydrodynamische Maschine gemäß einem der Ansprüche 1 bis 13, **dadurch gekennzeichnet, dass** der Schmiermittelkreislauf zwischen dem Schmiermittelreservebehälter (15) und dem wenigstens einen Gleitlager (7, 8, 8') allein durch eine Pumpwirkung des wenigstens einen Gleitlagers (7, 8, 8') hergestellt ist.

15. Hydrodynamische Maschine gemäß einem der Ansprüche 1 bis 14, **dadurch gekennzeichnet, dass** der Schmiermittelreservebehälter (15) stirnseitig an der hydrodynamischen Maschine montiert, insbesondere angeschweißt ist, wobei dieser vorteilhaft das wenigstens eine Gleitlager (7, 8, 8') oder eins oder mehrere von einer Vielzahl von Gleitlagern (7, 8, 8') radial von außen umschließt.

## Claims

1. Hydrodynamic machine, in particular hydrodynamic coupling, having a bladed primary wheel (1, 1') revolving about an axis of rotation of the hydrodynamic machine and a bladed secondary wheel (2, 2'), which is stationary or revolves about the axis of rotation, which together form a toroidal working space (3, 3'), which can be filled or is filled with a working medium, in order to transmit torque hydrodynamically from the primary wheel (1, 1') to the secondary wheel (2, 2') by means of working medium circulation in the working space (3, 3');
1.1 wherein the primary wheel (1, 1') and/or the secondary wheel (2, 2') is/are rotatably mounted by means of at least one sliding bearing (7, 8, 8');
1.2 having a lubricant supply system (33) for the at least one sliding bearing (7, 8, 8'), comprising a lubricant source (28), which is connected to the sliding bearing (7, 8, 8') by at least one lubricant supply line (30), and a lubricant outlet (34), which is connected to the at least one sliding bearing (7, 8, 8') by a lubricant discharge line (31);
**characterized in that**
1.3 a lubricant reservoir (15) is provided in the lubricant supply line (30) and/or the lubricant discharge line (31), said reservoir being connected to the at least one sliding bearing (7, 8, 8') via at least one lubricant feed (16) and at least one lubricant return (17) in order to form a lubricant circuit between the lubricant reservoir (15) and the at least one sliding bearing (7, 8, 8') if the lubricant supply from the lubricant source (28) fails.

2. Hydrodynamic machine according to Claim 1, **characterized in that** the lubricant reservoir (15) has at least four lubricant ports, namely a first lubricant port, which is connected to the lubricant source (28), a second lubricant port, which is connected to the lubricant outlet (34), a third lubricant port, which is connected to the lubricant feed (16), and a fourth lubricant port, which is connected to the lubricant return (17).

3. Hydrodynamic machine according to either of Claims 1 or 2, **characterized in that** a shutoff valve (29) and/or a changeover valve (32) is/are provided in the lubricant supply line (30), wherein the changeover valve (32) is connected, in particular via three ports, to the lubricant source (28), the lubricant reservoir (15) and the sliding bearing (7, 8, 8'), and, wherein a first position, connects at least or exclusively the lubricant source (28) to the at least one sliding bearing (7, 8, 8') and, in a second position, connects only the lubricant reservoir (15) to the sliding bearing (7, 8, 8').

4. Hydrodynamic machine according to one of Claims 1 to 3, **characterized in that** the lubricant is water or a water mixture.

5. Hydrodynamic machine according to one of Claims 2 to 4, **characterized in that** a bursting disk (24) is provided in the first lubricant port and/or in the second lubricant port.

6. Hydrodynamic machine according to one of Claims 2 to 5, **characterized in that** the lubricant reservoir (15) has a cylindrical shape, hollow-cylindrical shape or some other shape extending centrically or eccentrically over the circumference of the axis of rotation of the hydrodynamic machine, and the lubricant ports are arranged in a manner distributed over the circumference.

7. Hydrodynamic machine according to one of Claims 6, **characterized in that** the first lubricant port and the second lubricant port are provided directly in series in the circumferential direction of the cylinder or hollow cylinder, with a dividing wall arranged in between, in particular in the form of a dividing plate (23).

8. Hydrodynamic machine according to either of Claims 6 and 7, **characterized in that** the fourth lubricant port is positioned above the third lubricant port in the lubricant reservoir (15).

9. Hydrodynamic machine according to one of Claims 1 to 9, **characterized in that** a multiplicity of sliding bearings (7, 8, 8') is provided, wherein the lubricant flows through different sliding bearings (7, 8, 8'), in particular in series through said bearings.

10. Hydrodynamic machine according to Claim 9, **characterized in that** at least one sliding bearing is embodied as an axial sliding bearing (7) and at least one sliding bearing is embodied as a radial sliding bearing (8, 8'), and the lubricant is, in particular, passed from the lubricant source (28) and/or the lubricant reservoir (15) initially to the at least one radial sliding bearing (8, 8') and then to the axial sliding bearing (7) or vice versa.

11. Hydrodynamic machine according to Claim 10, **characterized in that** a plurality of axial sliding bearings (7) and/or radial sliding bearings (8, 8') is provided, through each of which the lubricant flows in parallel.

12. Hydrodynamic machine according to one of Claims 1 to 11, **characterized in that** the lubricant is simultaneously the working medium, wherein said medium is, in particular, passed initially through the sliding bearing or bearings (7, 8, 8') and then into the working space (3, 3') or vice versa.

13. Hydrodynamic machine according to one of Claims 1 to 12, **characterized in that** the lubricant is simultaneously the working medium, wherein said medium is passed through the sliding bearing or bearings (7, 8, 8') in parallel and into the working space (3, 3').

14. Hydrodynamic machine according to one of Claims 1 to 13, **characterized in that** the lubricant circulation between the lubricant reservoir (15) and the at least one sliding bearing (7, 8, 8') is established exclusively by a pumping action of the at least one sliding bearing (7, 8, 8').

15. Hydrodynamic machine according to one of Claims 1 to 14, **characterized in that** the lubricant reservoir (15) is mounted at the end of the hydrodynamic machine, in particular being welded on, wherein said reservoir advantageously surrounds the at least one sliding bearing (7, 8, 8') or one or more of a multiplicity of sliding bearings (7, 8, 8') radially from the outside.

## Revendications

1. Machine hydrodynamique, en particulier accouplement hydrodynamique, avec une roue primaire garnie d'aubes (1, 1') tournant au moyen d'un axe de rotation de la machine hydrodynamique et avec une roue secondaire garnie d'aubes (2, 2') stationnaire ou tournant au moyen de l'axe de rotation, qui forment l'une avec l'autre une chambre de travail (3, 3') de forme torique qui peut être ou qui est remplie d'un fluide de travail, afin de transmettre un couple de rotation de façon hydrodynamique de la roue primaire (1, 1') à la roue secondaire (2, 2') au moyen d'un circuit de fluide de travail dans la chambre de travail (3, 3');
1.1 dans laquelle la roue primaire (1, 1') et/ou la roue secondaire (2, 2') sont montées de façon rotative au moyen d'au moins un palier lisse (7, 8, 8');
1.2 avec un système d'alimentation en lubrifiant (33) pour ledit au moins un palier lisse (7, 8, 8'), comprenant une source de lubrifiant (28) qui est raccordée au palier lisse (7, 8, 8') au moyen d'au moins une conduite d'alimentation en lubrifiant (30), et une sortie de lubrifiant (34), qui est raccordée audit au moins un palier lisse (7, 8, 8') au moyen d'une conduite d'évacuation de lubrifiant (31) ;
**caractérisée en ce que**
1.3 il est prévu dans la conduite d'alimentation en lubrifiant (30) et/ou dans la conduite d'évacuation de lubrifiant (31) un récipient de réserve de lubrifiant (15) qui, pour la formation d'un circuit de lubrifiant entre le récipient de réserve de lubrifiant (15) et ledit au moins un palier lisse (7, 8, 8') en cas de panne de l'alimentation en lubrifiant à partir de la source de lubrifiant (28), est raccordé audit au moins un palier lisse (7, 8, 8') par au moins une arrivée de lubrifiant (16) et au moins un retour de lubrifiant (17).

2. Machine hydrodynamique selon la revendication 1, **caractérisée en ce que** le récipient de réserve de lubrifiant (15) présente au moins quatre raccords de lubrifiant, à savoir un premier raccord de lubrifiant qui est raccordé à la source de lubrifiant (28), un deuxième raccord de lubrifiant qui est raccordé à la sortie de lubrifiant (34), un troisième raccord de lubrifiant qui est raccordé à l'arrivée de lubrifiant (16), et un quatrième raccord de lubrifiant qui est raccordé au retour de lubrifiant (17).

3. Machine hydrodynamique selon une des revendications 1 ou 2, **caractérisée en ce qu'**il est prévu dans la conduite d'alimentation en lubrifiant (30) une soupape d'arrêt (29) et/ou une soupape d'inversion (32), dans laquelle la soupape d'inversion (32) est raccordée en particulier au moyen de trois raccords à la source de lubrifiant (28), au récipient de réserve de lubrifiant (15) et au palier lisse (7, 8, 8'), et relie dans une première position de commutation au moins ou exclusivement la source de lubrifiant (28) audit au moins un palier lisse (7, 8, 8') et dans une deuxième position de commutation uniquement le récipient de réserve de lubrifiant (15) au palier lisse (7, 8, 8').

4. Machine hydrodynamique selon l'une quelconque des revendications 1 à 3, **caractérisée en ce que** le lubrifiant est une eau ou un mélange aqueux.

5. Machine hydrodynamique selon l'une quelconque des revendications 2 à 4, **caractérisée en ce qu'**il est prévu un disque de rupture (24) dans le premier raccord de lubrifiant et/ou dans le deuxième raccord de lubrifiant.

6. Machine hydrodynamique selon l'une quelconque des revendications 2 à 5, **caractérisée en ce que** le récipient de réserve de lubrifiant (15) présente une forme cylindrique, une forme cylindrique creuse ou une autre forme s'étendant de façon centrée ou excentrique sur la périphérie de l'axe de rotation de la machine hydrodynamique et les raccords de lubrifiant sont disposés de façon répartie sur la périphérie.

7. Machine hydrodynamique selon une des revendications 6, **caractérisée en ce que** le premier raccord de lubrifiant et le deuxième raccord de lubrifiant sont prévus l'un derrière l'autre dans la direction périphérique du cylindre ou du cylindre creux, avec une paroi de séparation disposée entre eux, en particulier sous la forme d'une tôle de séparation (23).

8. Machine hydrodynamique selon une des revendications 6 et 7, **caractérisée en ce que** le quatrième raccord de lubrifiant est positionné au-dessus du troisième raccord de lubrifiant dans le récipient de réserve de lubrifiant (15).

9. Machine hydrodynamique selon l'une quelconque des revendications 1 à 9, **caractérisée en ce qu'**il est prévu une multiplicité de paliers lisses (7, 8, 8'), dans laquelle différents paliers lisses (7, 8, 8') sont parcourus en particulier en série par le lubrifiant.

10. Machine hydrodynamique selon la revendication 9, **caractérisée en ce qu'**au moins un palier lisse est réalisé en forme de palier lisse axial (7) et au moins un palier lisse est réalisé en forme de palier lisse radial (8, 8') et le lubrifiant provenant de la source de lubrifiant (28) et/ou du récipient de réserve de lubrifiant (15) est conduit en particulier d'abord audit au moins un palier lisse radial (8, 8') et ensuite au palier lisse axial (7) ou inversement.

11. Machine hydrodynamique selon la revendication 10, **caractérisée en ce qu'**il est prévu plusieurs paliers lisses axiaux (7) et/ou paliers lisses radiaux (8, 8'), qui sont respectivement parcourus parallèlement l'un à l'autre par le lubrifiant.

12. Machine hydrodynamique selon l'une quelconque des revendications 1 à 11, **caractérisée en ce que** le lubrifiant est en même temps le fluide de travail, dans laquelle celui-ci est conduit en particulier d'abord à travers le ou les palier(s) lisse(s) (7, 8, 8') et ensuite dans la chambre de travail (3, 3') ou inversement.

13. Machine hydrodynamique selon l'une quelconque des revendications 1 à 12, **caractérisée en ce que** le lubrifiant est en même temps le fluide de travail, dans laquelle celui-ci est conduit parallèlement à travers le ou les palier(s) lisse(s) (7, 8, 8') et dans la chambre de travail (3, 3').

14. Machine hydrodynamique selon l'une quelconque des revendications 1 à 13, **caractérisée en ce que** le circuit de lubrifiant est établi entre le récipient de réserve de lubrifiant (15) et ledit au moins un palier lisse (7, 8, 8') uniquement par un effet de pompage dudit au moins un palier lisse (7, 8, 8').

15. Machine hydrodynamique selon l'une quelconque des revendications 1 à 14, **caractérisée en ce que** le récipient de réserve de lubrifiant (15) est monté, en particulier soudé, frontalement sur la machine hydrodynamique, dans laquelle celui-ci entoure avantageusement ledit au moins un palier lisse (7, 8, 8') ou bien un ou plusieurs d'une multiplicité de paliers lisses (7, 8, 8') radialement par l'extérieur.
